# EUROPÄISCHE PATENTSCHRIFT

(11) **EP 3 051 070 B1**
(45) Veröffentlichungstag und Bekanntmachung des Hinweises auf die Patenterteilung: **28.06.2017**
(21) Anmeldenummer: 15196894.8
(22) Anmeldetag: 27.11.2015
(51) Int. Cl.: F16J 15/3268, F01D 11/00, F01D 11/02, F02C 7/28, F16J 15/3288

(54) **VORRICHTUNG UND VERFAHREN ZUR BEFESTIGUNG VON DICHTUNGSELEMENTEN**
DEVICE AND METHOD FOR FIXING OF GASKETS
DISPOSITIF ET PROCEDE DE FIXATION D'ELEMENTS D'ETANCHEITE

(30) Priorität: 28.01.2015 DE 102015201401
(43) Veröffentlichungstag der Anmeldung: 03.08.2016
(73) Patentinhaber: MTU Aero Engines AG, 80995 München (DE)
(72) Erfinder: Weber, Julian, 80797 München (DE)

(56) Entgegenhaltungen:
- EP-A2- 1 018 613
- DE-A1- 19 720 649
- DE-A1-102013 205 922

## Beschreibung

Die Erfindung betrifft eine Vorrichtung zur Befestigung von Dichtungselementen in einer Ausnehmung gemäß dem Oberbegriff des Anspruchs 1. Die Erfindung betrifft zudem ein Verfahren zur Befestigung von Dichtungselementen in einer Ausnehmung unter Verwendung einer Vorrichtung sowie ein Verfahren zur Herstellung einer entsprechenden Vorrichtung.

Derartige Dichtungselemente oder -systeme kommen bei sogenannten Spalterhaltungssystemen in Verdichter- und Turbinenkomponenten von Strömungsmaschinen zur Anwendung. Dabei haben derartige Dichtungssysteme die Aufgabe, einen Dichtspalt eines rotierenden Bauteils, z. B. einer Beschaufelung, zu einem feststehenden Bauteil, z. B. einem Gehäuse, der Strömungsmaschine minimal zu halten und damit ein stabiles Betriebsverhalten bei hohem Wirkungsgrad zu garantieren. Bei den genannten Dichtungssystemen kann es sich im sogenannte Bürstendichtungen oder Labyrinthdichtungen handeln. Dabei werden z. B. zur Befestigung von Einbaublechen für Bürstendichtungen in der Regel Ausnehmungen bzw. Einbaunuten in dem betreffenden Bauteil mit Hinterschnitt benötigt. Die verwendeten Gehäusebleche werden in diese Einbaunuten mit Hinterschnitt eingestemmt und durch eine entsprechende Verformung der Gehäusebleche in der Einbaunut fixiert. Zur Befestigung von Labyrinthdichtungen in U-förmige Einbaunuten werden üblicherweise Einstemmdrähte verwendet. Nachteilig an den bekannten Vorrichtungen und Verfahren zur Befestigung von Dichtungselementen in einer Ausnehmung ist jedoch, dass diese sehr aufwändig gestaltet und dadurch zeitintensiv in ihrem Einbau sind. Zudem werden zusätzliche Elemente wie z. B. die genannten Einstemmdrähte benötigt.
Aus der DE 10 2013 205 922 A1 ist eine Vorrichtung zur Befestigung von Dichtungselementen in einer Ausnehmung gemäß dem Oberbegriff des Anspruchs 1 bekannt. Diese ermöglicht einen vereinfachten und schnellen Einbau der Dichtungselemente. Zudem erlauben die beschriebenen Fixierkörper einen sicheren Einbau und guten Halt aufgrund eines Kraftschlusses mit einem Bürstendichtungsgehäuse durch Selbsthemmung. Allerdings kann es durch Setzvorgänge und Vibrationen des Bauteils zu einem unerwünschten Lösen des Fixierkörpers kommen.

Aufgabe der vorliegenden Erfindung ist es daher, eine Vorrichtung und ein Verfahren zur Befestigung von Dichtungselementen in einer Ausnehmung zu schaffen, die eine zusätzliche Sicherung gegen ein Lösen des Fixierkörpers gewährleisten. Eine weitere Aufgabe ist es, eine gattungsgemäße Vorrichtung formgenau und kostengünstig herzustellen. Die Aufgaben werden erfindungsgemäss durch eine Vorrichtung mit den Merkmalen des Patentanspruchs 1, ein Befestigungsverfahren mit den Merkmalen des Patentanspruchs 11 sowie ein Herstellungsverfahren mit den Merkmalen des Patentanspruchs 13 gelöst. Vorteilhafte Ausgestaltungen der Erfindung sind in den jeweiligen Unteransprüchen angegeben, wobei vorteilhafte Ausgestaltungen der Vorrichtung als vorteilhafte Ausgestaltungen des erfindungsgemäßen Befestigungsverfahrens - und unagekehrt - anzusehen sind.

Eine erfindungsgemäße Vorrichtung zur Befestigung von Dichtungselementen in einer Ausnehmung weist mindestens ein Dichtungsträgerelement umfassend mindestens ein Dichtungselement auf. Dabei ist mindestens ein Fixierkörper zwischen dem Dichtungsträgerelement und einem dem Dichtungsträgerelement zugeordneten Klemmkörper angeordnet, wobei der Fixierkörper mit dem Dichtungsträgerelement und dem Klemmkörper integral über mittels Krafteinwirkung lösbare stegartige Verbindungen verbunden ist. Zudem ist an dem Fixierkörper mindestens eine plastisch verformbare Struktur ausgebildet. Durch die erfindungsgemäße Ausgestaltung der Vorrichtung zur Befestigung von Dichtungselementen ist einerseits ein vereinfachter und schneller Einbau der Dichtungselemente dadurch gegeben, dass auf aufwändige Nuten mit Hinterschnitt sowie zusätzliche Befestigungselemente verzichtet werden kann, da der Fixierkörper in eingestemmten Zustand einen Kraftschluss zwischen der erfindungsgemäßen Vorrichtung und der Ausnehmung bzw. der Seitenwände der Ausnehmung gewährleistet. Zudem sorgt die plastisch verformbare Struktur für einen zusätzlichen Formschluss zwischen dem Fixierkörper und der erfindungsgemäßen Vorrichtung und der Ausnehmung bzw. der Seitenwände der Ausnehmung. Dadurch ergibt sich eine zusätzliche Sicherung gegen ein Lösen des Fixierkörpers bei Setzvorgängen und Vibrationen des Bauteils. In einer vorteilhaften Ausgestaltung der erfindungsgemäßen Vorrichtung der Fixierkörper derart ausgebildet, dass bei einem Lösen der Verbindung zwischen dem Fixierkörper und dem Dichtungsträgerelement einerseits und zwischen dem Klemmkörper und dem Fixierkörper andererseits ein Kraftschluss zwischen dem Fixierkörper, dem Dichtungsträgerelement, dem Klemmkörper und Seitenwänden der Ausnehmung sowie zumindest teilweise ein Formschluss zwischen der plastisch varformbaren Struktur und dem Dichtungsträgerelement und/oder dem Klemmkörper erfolgt Dadurch ist eine sichere Befestigung der erfindungsgemäßen Vorrichtung in der Einbaunut bzw. der Ausnehmung durch Kraft- und Formschluss gewährleistet. Zudem ist die Befestigung der erfindungsgemäßen Vorrichtung durch ein einfaches Einstemmen des Fixierkörpers und dem daraus folgenden Kraft- und Formschluss möglich. Bei der genannten Ausnehmung kann es sich um eine in einer Strömungsmaschine ausgebildete Einbaunut handeln.

Die plastisch verformbare Struktur ist als mindestens ein steg- oder zapfenartiger Vorsprung an einem in Richtung der Ausnehmung zeigenden Ende des Fixierkörpers, ausgebildet. Entscheidend bei der Ausgestaltung der Struktur ist, dass diese derart dimensioniert wird, dass eine plastische Verformung des Materials der Struktur bzw, der Struktur selbst durch Krafteinwirkung möglich ist. Dabei können der Fixierkörper und dessen plastisch verformbare Struktur beispielsweise aus einer Nickelbasislegierung bestehen. Des Weiteren besteht die Möglichkeit, dass die plastisch verformbare Struktur in mindestens eine in dem Dichtungsträgerelement und/oder dem Klemmkörper ausgebildete Ausnehmung unter zumindest teilweisem Formschluss einbringbar ist. Dabei kann die Ausgestaltung bzw. Form der Ausnehmung zumindest teilweise der Form des steg- oder zapfenartigen Vorsprungs entsprechen. Durch diese Ausgestaltungsmöglichkeiten der erfindungsgemäßen Vorrichtung ergeben sich sichere Verbindungen zwischen dem Fixierkörper und dem Dichtungsträgerelement und/oder dem Klemmkörper. Es ist aber auch möglich, dass die Form der Struktur zur vorbestimmten Ausdehnung und Richtung des Formschlusses ausgebildet ist. So kann die Struktur richtungs- und zielsicher in eine entsprechende Ausnehmung in dem Dichtungsträgerelement und/oder dem Klemmkörper geleitet werden. Der Ort und die Lage der verformten Struktur sind somit bestimmbar und können an die vorhandenen baulichen Gegebenheiten ohne Weiteres angepasst werden. Zudem kann die Struktur einstückig mit dem Fixierkörper ausgebildet sein. Dadurch ist die Struktur mit dem Fixierkörper besonders günstig herstellbar. Insbesondere erfolgt die einstückige bzw. integrale Herstellung des Fixierkörpers mittels eines additiven oder generativen Herstellungsverfahrens.
In weiteren Ausgestaltungen der erfindungsgemäßen Vorrichtung kann das Dichtungsträgerelement als Gehäuse zur Aufnahme des Dichtungselementes ausgebildet sein. Das Dichtungselement kann dabei als Bürstendichtung ausgebildet sein. Des Weiteren ist es möglich, dass das Dichtungsträgerelement als Basiselement des Dichtungselementes ausgebildet ist, wobei das Dichtungselement eine Labyrinthdichtung mit entsprechenden Labyrinthfinnen ist.

In einer weiteren vorteilhaften Ausgestaltung der erfindungsgemäßen Vorrichtung sind die stegartigen Verbindungen derart ausgebildet, dass sie vom Dichtungsträgerelement und dem entsprechenden gegenüberliegenden Klemmkörper jeweils abstehend unter Ausbildung eines Winkels in Richtung der Ausnehmung bzw. Einbaunut zeigend ausgebildet sind. Nach dem Einstemmen und Loslösen des Fixierkörpers von den stegartigen Verbindungen zur Erzielung des oben erwähnten Kraft- und Formschlusses verhindern die schräg gestellten Verbindungsstege ein Zurückrutschen des Fixierkörpers durch die entstehende mechanische Verklammerung aufgrund ihrer Anordnung und Ausbildung. Damit ist wiederum eine sichere Befestigung der Dichtungselemente in der Ausnehmung gewährleistet.

In weiteren vorteilhaften Ausgestaltungen der erfindungsgemäßen Vorrichtung ist ein zwischen dem Dichtungsträgerelement und dem gegenüberliegenden Klemmkörper ausgebildeter Raum zur Aufnahme des Fixierkörpers mit der verformbaren Struktur in Richtung der Ausnehmung sich verjüngend ausgebildet. Durch das Einstemmen eines entsprechend geformten Fixierkörpers werden das Dichtungsträgerelement und der Klemmkörper in unterschiedliche Richtungen voneinander wegbewegt und entsprechend in der Ausnehmung fixiert. Dabei kann zwischen einem in Richtung der Ausnehmung zeigenden Ende des Fixierkörpers und einer Basis der Ausnehmung ein Freiraum ausgebildet sein. Der Abstand zwischen dem Ende des Fixierkörpers und der Basis der Ausnehmung kann zur Definition der Größe des Kraft- und Formschlusses zwischen den Einzelelementen der erfindungsgemäßen Vorrichtung vordefiniert werden.

In weiteren vorteilhaften Ausgestaltungen der erfindungsgemäßen Vorrichtung ist der Fixierkörper mit der verformbaren Struktur in Richtung der Ausnehmung sich generell verjüngend ausgebildet. Dabei kann der Fixierkörper keil- oder stumpfkegelförmig ausgebildet sein. Im Zusammenspiel mit dem zwischen dem Dichtungsträgerelement und dem gegenüberliegenden Klemmkörper ausgebildeten Raum ergibt sich durch diese Form des Fixierkörpers ein sicherer Kraft- und Formschluss zwischen den genannten Elementen nach einem Loslösen des Fixierkörpers von den stegartigen Verbindungen und einem Einstemmen in Richtung der Ausnehmung. Aber auch andere Formen für den Fixierkörper sind denkbar. Die Form des Fixierkörpers muss dabei jeweils an den zwischen dem Dichtungsträgerelement und dem gegenüberliegenden Klemmkörper ausgebildeten Raum angepasst sein. Entscheidend dabei ist, dass es nach einem Lösen der Verbindung zwischen dem Fixierkörper und dem Dichtungsträgerelement bzw. dem Klemmkörper zu einem Kraft- und Formschluss zwischen dem Fixierkörper, dem Dichtungsträgerelement, dem Klemmkörper und den Seitenwänden der Ausnehmung kommt.

In weiteren vorteilhaften Ausgestaltungen der erfindungsgemäßen Vorrichtung sind der Fixierkörper mit der plastisch verformbaren Struktur, das Dichtungsträgerelement, der Klemmkörper sowie die stegartigen Verbindungen einstückig ausgebildet. Insbesondere erfolgt die einstückige bzw. integrale Herstellung der erfindungsgemäßen Vorrichtung mittels eines generativen Herstellungsverfahrens. Zudem ist es möglich, dass der Fixierkörper, das Dichtungsträgerelement, der Klemmkörper, die stegartigen Verbindungen sowie das als Labyrinthdichtung ausgebildete Dichtungselement ebenfalls einstückig ausgebildet sind. Auch hier kann die integrale Herstellung der Vorrichtung mittels eines generativen Herstellungsverfahrens erfolgen.

Die Erfindung betrifft weiterhin ein Verfahren zur Befestigung von Dichtungselementen in einer Ausnehmung unter Verwendung einer Vorrichtung wie im Vorhergehenden beschrieben, wobei das Verfahren folgende Schritte umfasst:
a) Einbringen der Vorrichtung in die Ausnehmung;
b) Aufbringen einer Kraft in Richtung der Ausnehmung auf den Fixierkörper, derart, dass ein Lösen der Verbindung zwischen dem Fixierkörper und dem Dichtungsträgerelement einerseits und zwischen dem Klemmkörper und dem Fixierkörper andererseits bewirkt wird; und
c) weiteres Aufbringen der Kraft auf den Fixierkörper, bis einerseits ein Kraftschluss zwischen dem Fixierkörper, dem Dichtungsträgerelement, dem Klemmkörper und Seitenwänden der Ausnehmung und andererseits zumindest teilweise ein Formschluss zwischen der plastisch verformbaren Struktur und dem Dichtungsträgerelement und/oder dem Klemmkörper erfolgt.

Durch dieses Verfahren ist ein einfacher und schneller Einbau der Dichtungselemente in die entsprechende Ausnehmung gewährleistet. Auf zusätzliche Befestigungselemente oder eine spezielle und aufwändige Ausgestaltung der Ausnehmung kann vorteilhafterweise verzichtet werden. Zudem ist das Fixierelement sicher gegen ein Lösen aus der Verbindung geschützt. Bei der Ausnehmung kann es sich um eine in einer Strömungsmaschine ausgebildete Einbaunut handeln.

Die Erfindung betrifft weiterhin ein Verfahren zur Herstellung einer erfindungsgemäßen Vorrichtung wie im Vorhergehenden beschrieben. Dabei wird die erfindungsgemäße Vorrichtung mittels eines additiven oder generativen Herstellungsverfahrens hergestellt. So kann das generative Herstellungsverfahren ein selektives Laserschmelzverfahren oder ein selektives Lasersinterverfahren sein. Auch andere additive oder generative Herstellungsverfahren sind denkbar. Durch die Verwendung von generativen Fertigungsverfahren ist ein formgenaues und kostengünstiges Herstellen der erfindungsgemäßen Vorrichtung zur Befestigung von Dichtungselementen möglich.

Dabei zeigt
- Figur 1: eine schematische Schnittdarstellung einer ersten Ausfübrungsform der erfindungsgemäßen Vorrichtung; und
- Figur 2: eine schematische Schnittdarstellung einer zweiten Ausführungsform der erfindungsgemäßen Vorrichtung.

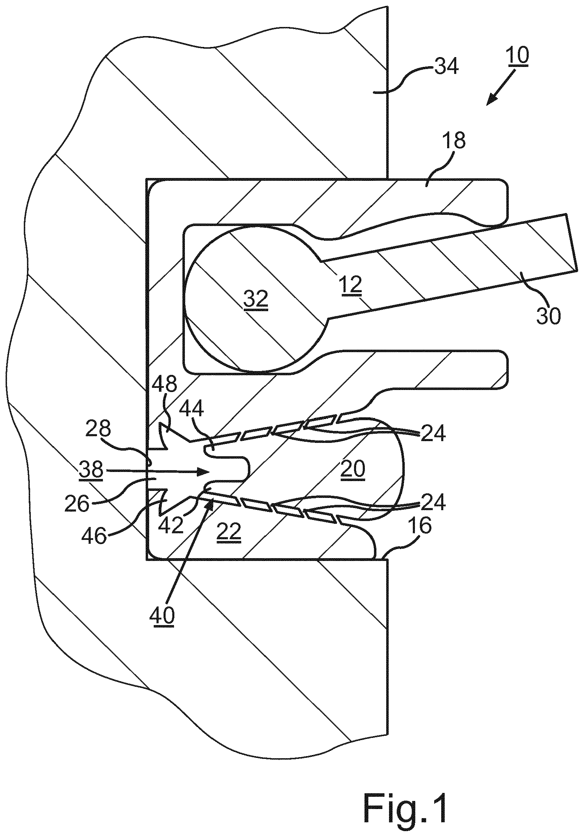

Die in Figur 1 gezeigte erste Ausführungsform einer Vorrichtung 10 zur Befestigung von Dichtungselementen umfasst ein Dichtungsträgerelement 18, einen Fixierkörper 20 mit einer plastisch verformbaren Struktur 40 und einen dem Dichtungsträgerelement 18 zugeordneten Klemmkörper 22. Der Fixierkörper 20 ist dabei zwischen dem Dichtungsträgerelement 18 und dem Klemmkörper 22 mittels stegartiger Verbindungen 24 fixiert. In dem dargestellten Ausführungsbeispiel ist das Dichtungsträgerelement 18 als Gehäuse zur Aufnahme einer Bürstendichtung ausgebildet. Das als Bürstendichtung ausgebildete Dichtungselement 12 besteht dabei aus einer Vielzahl von schematisch dargestellten Fasern 30, die um eine Einheit 32 bestehend aus einem aus Klemmring und einem Kern der Bürstendichtung gewickelt sind. Das verdickte Ende der Bürstendichtung bzw. der Einheit 32 ist dabei innerhalb des als Gehäuse ausgebildeten Dichtungsträgerelementes 18 gelagert, wobei die Innenwände des Gehäuses derart ausgeformt sind, dass eine sichere Fixierung der Bürstendichtung in dem Gehäuse gewährleistet ist Der Aufbau der Bürstendichtung an sich entspricht den bekannten Bürstendichtungen.

Die Vorrichtung 10 ist in einer Ausnehmung. 16 angeordnet. Die Ausnehmung 16 ist in dem dargestellten Ausführungsbeispiel eine in einem Bauteil 34 einer Strömungsmaschine ausgebildete Einbaunut. Bei der Strömungsmaschine kann es sich um eine Dampf- oder Gasturbine oder ein Flugtriebwerk, insbesondere einen Verdichter oder eine Turbine eines Flugtriebwerks, handeln.

Des Weiteren erkennt man, dass der Fixierkörper 20 mit der Struktur 40 in dem dargestellten Ausführungsbeispiel generell keilförmig ausgebildet ist, wobei sich der Fixierkörper 20 in Richtung der Ausnehmung 16 bzw. einer Basis 28 der Ausnehmung 16 verjüngt. Entsprechendes gilt für einen zwischen dem Dichtungsträgerelement 18 und dem gegenüberliegenden Klemmkörper 22 ausgebildeten Raum zur Aufnahme des Fixierkörpers 20. Auch dieser ist in Richtung der Ausnehmung 16 sich verjüngend ausgebildet. Man erkennt, dass die plastisch verformbare Struktur 40 zwei steg- oder zapfenartige Vorsprünge 42, 44 umfasst. Diese sind an einem in Richtung der Ausnehmung 16 zeigenden Ende 30 des Fixierkörpers 20 ausgebildet. Auch andere Formen sind möglich. Zudem wird deutlich, dass die plastisch verformbare Struktur 40 mit ihren Vorsprüngen 42, 44 in jeweils eine in dem Dichtungsträgerelement 18 und dem Klemmkörper 22 ausgebildete Ausnehmung 46, 48 unter zumindest teilweisem Formschluss einbringbar ist. Die gebogenen Enden der Vorsprünge 42, 44 geben dabei die Richtung der Verformung dieses Bereiches vor. Die Ausnehmungen 46, 48 sind in ihrer Form bzw. Ausgestaltung an die Form der Vorsprünge 42, 44 angepasst. So kann die Struktur 40 richtungs- und zielsicher in die entsprechende Ausnehmungen 46, 48 geleitet werden. Der Ort und die Lage der verformten Struktur sind somit bestimmbar und kann an die vorhandenen baulichen Gegebenheiten ohne Weiteres angepasst werden. Zudem ist die Struktur 40 einstückig mit dem Fixierkörper 20 ausgebildet.

Durch ein Einstemmen des Fixierkörpers 20 in Richtung der Ausnehmung 16 bzw. der Basis 28 der Ausnehmung 16 wird der Fixierkörper 20 von den stegartigen Verbindungen 24 durch die entsprechende Krafteinwirkung gelöst (nicht dargestellt). Durch das Lösen der Verbindung zwischen dem Fixierkörper 20 und dem Dichtungsträgerelement 18 bzw. dem Klemmkörper 22 entsteht ein Kraftschluss zwischen dem Fixierkörper 20, dem Dichtungsträgerelement 18, dem Klemmkörper 22 und den Seitenwänden der Ausnehmung 16. Zudem ergibt sich ein Formschluss zwischen den Ausnehmungen 46,48 und den Vorsprüngen 42,44 bzw. der Struktur 40 des Fixierkörpers 20. Der Fixierkörper 20 drückt sowohl das Dichtungsträgerelement 18 wie auch den Klemmkörper 22 gegen die Seitenwände der Ausnehmung 16 und fixiert somit die Vorrichtung 10 innerhalb der Ausnehmung 16. Die stegartigen Verbindungen 24 sind dabei derart ausgebildet, dass sie vom Dichtungsträgerelement 18 und dem gegenüberliegenden Klemmkörper 22 jeweils abstehend unter Ausbildung eines Winkels in Richtung der Ausnehmung 16 bzw. der Basis 28 der Ausnehmung 16 zeigend ausgebildet sind. Durch diese Schrägstellung der Verbindungen 24 ist gewährleistet, dass der Fixierkörper 20 nach dem Lösen von den stegartigen Verbindungen 24 nicht mehr aus der Ausnehmung 16 heraus gleiten kann. Der genannte Formschluss zwischen der Struktur 40 und dem Dichtungsträgerelement 18 sowie dem gegenüberliegenden Klemmkörper 22 sichert den Fixierkörpers 20 zudem gegenüber einem unbeabsichtigten Herauslösen aus der Verbindung, z.B. bei starken Vibrationen des Bauteils 34, ab.

Des Weiteren wird deutlich, dass zwischen einem der Basis 28 der Ausnehmung 16 zugewandten Ende 38 des Fixierkörpers 20 und der Basis 28 der Ausnehmung 16 ein Raum 26 ausgebildet ist. Durch die Beabstandung des Fixierkörperendes 38 von der Basis 28 wird das Einstemmen des Fixierkörpers 20 in Richtung der Einbaunut 16 ermöglicht und auch begrenzt.

Der Fixierkörper 20, das Dichtungsträgerelement 18, der Klemmkörper 22 sowie die stegartigen Verbindungen 24 sind einstückig ausgebildet. Die Ausgestaltung der Vorrichtung 10 ermöglicht es zudem, dass die Bürstendichtung bereits vor dem Einbau des Bürstendichtungsgehäuses in die Ausnehmung 16 in das Gehäuse eingesetzt werden kann.

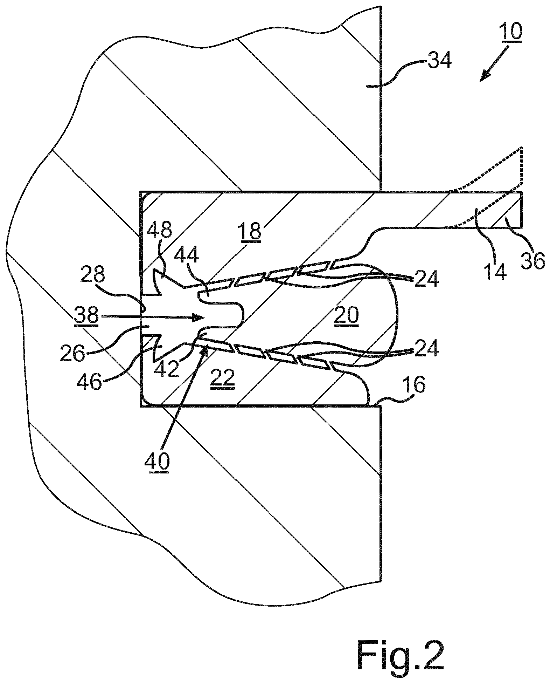

Figur 2 zeigt eine schematische Schnittdarstellung einer zweiten Ausführungsform der Vorrichtung 10. Hierbei ist das Dichtungselement 14 als Labyrinthdichtung mit entsprechenden Labyrinthfinnen 36 ausgebildet. Das Dichtungsträgerelement 18 bildet ein Basiselement des Dichtungselementes 14 bzw. der Labyrinthdichtung. Die Spitzen der Labyrinthfinnen 36 können dabei auch abgewinkelt ausgebildet sein (vgl. gestrichelte Darstellung). Auch bei dem zweiten Ausführungsbeispiel ist zwischen dem Dichtungsträgerelement 18 und dem entsprechenden Klemmkörper 22 der Fixierkörper 20 mit der plastisch verformbaren Struktur 40 angeordnet. Der Fixierkörper 20 ist wiederum mit dem Dichtungsträgerelement 18 und dem Klemmkörper 22 integral über die mittels Krafteinwirkung lösbaren stegartigen Verbindungen 24 verbunden. Im Unterschied zu dem in Figur 1 dargestellten ersten Ausführungsbeispiel ist bei dem zweiten Ausführungsbeispiel nicht nur der Fixierkörper 20, das Dichtungsträgerelement 18, der Klemmkörper 22 und die stegartigen Verbindungen 24 integral gefertigt bzw. einstückig ausgebildet, sondern auch das als Labyrinthdichtung ausgebildete Dichtungselement 14. Bezüglich der übrigen Merkmale wird auf die Beschreibung des ersten Ausführungsbeispiels in Figur 1 verwiesen.

Die in den Figuren 1 und 2 gezeigten Vorrichtungen 10 werden mittels eines generativen Herstellungsverfahrens, insbesondere eines selektiven Laserschmelz- oder selektiven Lasersinterverfahrens hergestellt. Dabei wird vorzugsweise ein zweistufiger Prozess wiederholend ausgeführt, wobei in einem ersten Schritt des zweistufigen Prozesses ein gleichmäßiges Pulverbett bereitgestellt wird. In einem zweiten Schritt wird auf Basis von aus einem dreidimensionalen CAD-Modell erzeugten Schichten das Pulver des Pulverbetts selektiv aufgeschweißt und damit verfestigt. Durch die wiederholende Ausführung dieses zweistufigen Prozesses wird die herzustellende Vorrichtung 10 schichtweise und damit sukzessive aufgebaut Das in dem ersten Schritt bereitgestellte Pulver besteht dabei aus Metall, einer Metall-Legierung, Keramik oder Kunststoff. Auch andere generative Herstellungsverfahren sind verwendbar. Durch die Verwendung von generativen Herstellungsverfahren ergeben sich vorteilhafterweise geometrische Freiheiten bei der Ausgestaltung der Vorrichtung insgesamt und des Dichtungsträgerelementes 18 sowie des Fixierkörpers 20 mit der Struktur 40 im besonderen, insbesondere bei der Ausgestaltung von Bürstendichtungsgehäusen oder auch bei der Gestaltung der Finnen der Labyrinthdichtung. Zudem ist es ohne Weiteres möglich, Variationen in der Materialstärke der einzelnen Elemente der Vorrichtung 10 zu verwirklichen.

## Patentansprüche

1. Vorrichtung zur Befestigung von Dichtungselementen (12, 14) in einer Ausnehmung (16) mit einer Strömungsmaschine mindestens einem Dichtungsträgerelement (18) umfassend mindestens ein Dichtungselement (12, 14) und mindestens einen Fixierkörper (20) welcher zwischen dem Dichtungsträgerelement (18) und einem dem Dichtungsträgerelement (18) zugeordneten Klemmkörper (22) angeordnet ist, wobei der Fixierkörper (20) mit dem Dichtungsträgerelement (18) und dem Klemmkörper (22) integral über mittels Krafteinwirkung lösbare stegartige Verbindungen (24) verbunden ist, wobei an dem Fixierkörper (20) mindestens eine plastisch verformbare Struktur (40) ausgebildet ist, **dadurch gekennzeichnet, dass** die plastisch verformbare Struktur (40) als mindestens ein steg- oder zapfenartiger Vorsprung (42, 44) an einem in Richtung der Ausnehmung (16) zeigenden Ende (38) des Fixierkörpers (20) ausgebildet ist.

2. Vorrichtung nach Anspruch 1, **dadurch gekennzeichnet, dass** der Fixierkörper (20) derart ausgebildet ist, dass bei einem Lösen der Verbindung zwischen dem Fixierkörper (20) und dem Dichtungsträgerelement (18) einerseits und zwischen dem Klemmkörper (22) und dem Fixierkörper (20) andererseits ein Kraftschluss zwischen dem Fixierkörper (20), dem Dichtungsträgerelement (18), dem Klemmkörper (22) und Seitenwänden der Ausnehmung (16) sowie zumindest teilweise ein Formschluss zwischen der plastisch verformbaren Struktur (40) und dem Dichtungsträgerelement (18) und/oder dem Klemmkörper (22) erfolgt.

3. Vorrichtung nach einem der vorhergehenden Ansprüche, **dadurch gekennzeichnet, dass** die plastisch verformbare Struktur (40) in mindestens eine in dem Dichtungsträgerelement (18) und/oder dem Klemmkörper (22) ausgebildete Ausnehmung (46, 48) unter zumindest teilweisem Formschluss einbringbar ist.

4. Vorrichtung nach Anspruch 3, **dadurch gekennzeichnet, dass** die Ausgestaltung der Ausnehmung (46,48) zumindest teilweise der Form des steg- oder zapfenartigen Vorsprungs (42, 44) entspricht.

5. Vorrichtung nach einem der vorhergehenden Ansprüche, **dadurch gekennzeichnet, dass** die Form der Struktur (40) zur vorbestimmten Ausdehnung und Richtung des Formschlusses ausgebildet ist.

6. Vorrichtung nach einem der vorhergehenden Ansprüche, **dadurch gekennzeichnet, dass** die stegartigen Verbindungen (24) vom Dichtungsträgerelement (18) und dem entsprechenden gegenüberliegenden Klemmkörper (22) jeweils abstehend unter Ausbildung eines Winkels in Richtung der Ausnehmung (16) zeigend ausgebildet sind.

7. Vorrichtung nach einem der vorhergehenden Ansprüche, **dadurch gekennzeichnet, dass** ein zwischen dem Dichtungsträgerelement (18) und dem gegenüberliegenden Klemmkörper (22) ausgebildeter Raum zur Aufnahme des Fixierkörpers (20) in Richtung der Ausnehmung (16) zumindest teilweise sich verjüngend ausgebildet ist.

8. Vorrichtung nach einem der vorhergehenden Ansprüche, **dadurch gekennzeichnet, dass** der Fixierkörper (20) in Richtung der Ausnehmung (16) sich generell verjüngend ausgebildet ist.

9. Vorrichtung nach Anspruch 8, **dadurch gekennzeichnet, dass** der Fixierkörper (20) keil- oder stumpfkegelförmig ausgebildet ist.

10. Vorrichtung nach einem der vorhergehenden Ansprüche, **dadurch gekennzeichnet, dass** die Struktur (40) einstückig mit dem Fixierkörper (20) ausgebildet ist.

11. Verfahren zur Befestigung von Dichtungselementen (12,14) in einer Ausnehmung (16) unter Verwendung einer Vorrichtung (10) gemäß einem der vorhergehenden Ansprüche, wobei das Verfahren folgende Schritte umfasst:
a) Einbringen der Vorrichtung (10) in die Ausnehmung (16);
b) Aufbringen einer Kraft in Richtung der Ausnehmung (16) auf den Fixierkörper (20), derart, dass ein Lösen der Verbindung zwischen dem Fixierkörper (20) und dem Dichtungsträgerelement (18) einerseits und zwischen dem Klemmkörper (22) und dem Fixierkörper (20) andererseits bewirkt wird; und
c) weiteres Aufbringen der Kraft auf den Fixierkörpers (20) bis einerseits ein Kraftschluss zwischen dem Fixierkörper (20), dem Dichtungsträgerelement (18), dem Klemmkörper (22) und Seitenwänden der Ausnehmung (16) und andererseits zumindest teilweise ein Formschluss zwischen der plastisch verformbaren Struktur (40) und dem Dichtungsträgerelement (18) und/oder dem Klemmkörper (22) erfolgt.

12. Verfahren zur Herstellung einer Vorrichtung (10) nach einem der Ansprüche 1 bis 11, wobei die Vorrichtung (10) mittels eines additiven oder generativen Herstellungsverfahrens hergestellt wird.

13. Verfahren nach Anspruch 12, **dadurch gekennzeichnet, dass** das generative Herstellungsverfahren ein selektives Laserschmelzverfahren oder ein selektives Lasersinterverfahren ist.

## Claims

1. A device for attaching sealing elements (12, 14) in a recess (16) of a turbomachine, comprising at least one seal carrier element (18) including at least one sealing element (12, 14) and at least one fixing body (20), which is disposed between the seal carrier element (18) and a clamping body (22) assigned to the seal carrier element (18), the fixing body (20) being integrally connected to the seal carrier element (18) and the clamping body (22) by web-like connections (24) detachable under the action of a force, and a plastically deformable structure (40) being formed on the fixing body (20), **characterized in that** the plastically reformable structure (40) is designed as at least one web- or pin-like projection (42, 44) on an end (38) of the fixing body (20) pointing in the direction of the recess (16).

2. The device according to claim 1, **characterized in that** the fixing body (20) is designed in such a way that, during a detachment of the connections between the fixing body (20) and the seal carrier element (18) on the one hand, and between the clamping body (22) and the fixing body (20) on the other hand, a force fit results between the fixing body (20), the seal carrier element (18), the clamping body (22), and side walls of the recess (16), and a form lock results at least partially between the plastically reformable structure (40) and the seal carrier element (18) and/or the clamping body (22).

3. The device according to any one of the preceding claims, **characterized in that** the plastically deformable structure (40) can be introduced into at least one recess (46, 48) formed in the seal carrier element (18) and/or in the clamping body (22) with at last partial form lock.

4. The device according to claim 2, **characterized in that** the design of the recess (46, 48) at least partially corresponds to the shape of the web- or pin-like projection (42, 44).

5. The device according to any one of the preceding claims, **characterized in that** the shape of the structure (40) is designed for a predetermined expansion and direction of the form lock.

6. The device according to any one of the preceding claims, **characterized in that** the web-like connections (24) are designed to each protrude from the seal carrier element (18) and the corresponding opposing clamping body (22), forming an angle pointing in the direction of the recess (16).

7. The device according to any one of the preceding claims, **characterized in that** a space formed between the seal carrier element (18) and the opposing clamping body (22) for receiving the fixing body (20) has an at least partially tapering design in the direction of the recess (16).

8. The device according to any one of the preceding claims, **characterized in that** the fixing body (20) in general tapers in the direction of the recess (16).

9. The device according to claim 8, **characterized in that** the fixing body (20) has a wedge or truncated cone shape.

10. The device according to any one of the preceding claims, **characterized in that** the structure (40) is designed in one piece with the fixing body (20).

11. A method for attaching sealing elements (12, 14) in a recess (16) using a device (10) according to any one of the preceding claims, the method comprising the following steps:
a) introducing the device (10) into the recess (16);
b) applying a force in the direction of the recess (16) on the fixing body (20) such that a detachment of the connections between the fixing body (20) and the seal carrier element (18) on the one hand, and between the clamping body (22) and the fixing body (20) is caused; and
c) continuing to apply the force on the fixing body (20) until a force fit results between the fixing body (20), the seal carrier element (18), the clamping body (22), and side walls of the recess (16) on the one hand and at least partially a form lock results between the plastically deformable structure (40) and the seal carrier element (18) and/or the clamping body (22) on the other hand.

12. The method for producing a device (10) according to any one of claims 1 to 11, wherein the device (10) is produced by way of an additive or a generative production method.

13. The method according to claim 12, **characterized in that** the generative production method is a selective laser melting process or a selective laser sintering process.

## Revendications

1. Dispositif de fixation d'éléments d'étanchéité (12, 14) dans une cavité (16) avec une turbomachine, au moins un élément de support d'étanchéité (18) comprenant au moins un élément d'étanchéité (12, 14) et au moins un corps de fixation (20) qui est agencé entre l'élément de support d'étanchéité (18) et un corps de serrage (22) affecté à l'élément de support d'étanchéité (18), dans lequel le corps de fixation (20) est relié à l'élément de support d'étanchéité (18) et au corps de serrage (22) d'un seul tenant via des raccords en forme d'étai (24) retirables en leur appliquant une force, dans lequel au moins une structure à déformation plastique (40) est formée sur le corps de fixation (20), **caractérisé en ce que** la structure à déformation plastique (40) se présente sous la forme d'au moins une saillie en forme d'étai ou de tenon (42, 44) à une extrémité (38) du corps de fixation (20) tournée dans la direction de la cavité (16).

2. Dispositif selon la revendication 1, **caractérisé en ce que** le corps de fixation (20) est formé de manière que, lors du retrait du raccord entre le corps de fixation (20) et l'élément de support d'étanchéité (18), d'une part, et entre le corps de serrage (22) et le corps de fixation (20), d'autre part, il se produise une adhérence entre le corps de fixation (20), l'élément de support d'étanchéité (18), le corps de serrage (22) et les parois latérales de la cavité (16) ainsi qu'au moins en partie une adaptation de forme entre la structure à déformation plastique (40) et l'élément de support d'étanchéité (18) et/ou le corps de serrage (22).

3. Dispositif selon l'une quelconque des revendications précédentes, **caractérisé en ce que** la structure à déformation plastique (40) peut être insérée dans au moins une cavité (46, 48) formée dans l'élément de support d'étanchéité (18) et/ou le corps de serrage (22) par adaptation de forme au moins en partie.

4. Dispositif selon la revendication 3, **caractérisé en ce que** la conformation de la cavité (46, 48) correspond au moins en partie à la forme de la saillie de type étai ou tenon (42,44).

5. Dispositif selon l'une quelconque des revendications précédentes, **caractérisé en ce que** la forme de la structure (40) est conformée pour l'extension et la direction prédéterminées de l'adaptation de forme.

6. Dispositif selon l'une quelconque des revendications précédentes, **caractérisé en ce que** les raccords en forme d'étai (24) sont conformés respectivement à distance de l'élément de support d'étanchéité (18) et du corps de serrage (22) qui lui est opposé de manière correspondante en formant un angle dans la direction de la cavité (16).

7. Dispositif selon l'une quelconque des revendications précédentes, **caractérisé en ce qu'**un espace formé entre l'élément de support d'étanchéité (18) et le corps de serrage (22) en regard est formé pour s'amincir au moins en partie dans la direction de la cavité (16) pour recevoir le corps de serrage (20).

8. Dispositif selon l'une quelconque des revendications précédentes, **caractérisé en ce que** le corps de serrage (20) est formé de manière à s'amincir généralement dans la direction de la cavité (16).

9. Dispositif selon la revendication 8, **caractérisé en ce que** le corps de serrage (20) présente une forme de cale ou de tronc de cône.

10. Dispositif selon l'une quelconque des revendications précédentes, **caractérisé en ce que** la structure (40) est formée d'un seul tenant avec le corps de fixation (20).

11. Procédé de fixation d'éléments d'étanchéité (12, 14) dans une cavité (16) en utilisant un dispositif (10) selon l'une quelconque des revendications précédentes, dans lequel le procédé comprend les étapes consistant à :
a) insérer le dispositif (10) dans la cavité (16) ;
b) appliquer une force dans la direction de la cavité (16) sur le corps de fixation (20) de sorte d'un retrait du raccord soit effectué entre le corps de fixation (20) et l'élément de support d'étanchéité (18), d'une part, et entre le corps de serrage (22) et le corps de fixation (20), d'autre part ; et
c) continuer à appliquer la force sur le corps de fixation (20) jusqu'à ce qu'il se produise, d'une part, une adhérence entre le corps de fixation (20), l'élément de support d'étanchéité (18), le corps de serrage (22) et les parois latérales de la cavité (16) et, d'autre part, au moins en partie une adaptation de forme entre la structure à déformation plastique (40) et l'élément de support d'étanchéité (18) et/ou le corps de serrage (22).

12. Procédé de fabrication d'un dispositif (10) selon l'une quelconque des revendications 1 à 11, dans lequel le dispositif (10) est fabriqué au moyen d'un procédé de fabrication par addition ou génération.

13. Procédé selon la revendication 12, **caractérisé en ce que** le procédé de fabrication par génération est un procédé sélectif de fusion au laser ou un procédé sélectif de frittage au laser.
